# EUROPÄISCHE PATENTSCHRIFT

(11) **EP 3 704 081 B1**
(45) Veröffentlichungstag und Bekanntmachung des Hinweises auf die Patenterteilung: **24.07.2024**
(21) Anmeldenummer: 18812036.4
(22) Anmeldetag: 18.10.2018
(51) Int. Cl.: C05D 1/04, C05D 3/00, C05D 5/00, C05D 9/02

(54) **VERFAHREN ZUR HERSTELLUNG KALIUM, MAGNESIUM UND SULFAT ENTHALTENDER GRANULATE**
PROCESS FOR PREPARING GRANULES THAT CONTAIN POTASSIUM, MAGNESIUM AND SULFATE
PROCÉDÉ POUR PRODUIRE DES GRANULATS CONTENANT DU POTASSIUM, DU MAGNÉSIUM ET DU SULFATE

(30) Priorität: 30.10.2017 DE 102017125467
(43) Veröffentlichungstag der Anmeldung: 09.09.2020
(73) Patentinhaber: K+S Aktiengesellschaft, 34131 Kassel (DE)
(72) Erfinder: KOPF, Sebastian, 36433 Bad Salzungen (DE); DIETRICH, Armin, 37299 Weißenborn (DE); RICHTER, Elmar, 36269 Philippsthal (DE); BAUCKE, Guido, 36277 Schenklengsfeld OT Wippershain (DE)
(74) Vertreter: Meissner Bolte Partnerschaft mbB
(86) Internationale Anmeldenummer: PCT/DE2018/000295
(87) Internationale Veröffentlichungsnummer: WO 2019/086061

(56) Entgegenhaltungen:
- DE-A1- 102012 016 992
- DE-A1- 102014 014 100
- DE-A1- 2 810 640
- SU-A1- 553 212

## Beschreibung

Die vorliegende Erfindung betrifft ein Verfahren zur Herstellung von Kalium, Magnesium und Sulfat enthaltenden Granulate, umfassend eine Aufbauagglomeration, insbesondere eine Rollagglomeration einer Salzzusammensetzung, die im Wesentlichen aus feinteiligem, kalzinierten Polyhalit oder einem Gemisch aus feinteiligem Polyhalit und wenigstens einem weiteren Alkali- oder Erdalkalisulfat besteht.

Polyhalit ist ein Mineral aus der Klasse der Sulfate und weist folgende chemische Zusammensetzung auf: K₂Ca₂Mg[SO₄]₄·2H₂O. Polyhalit kristallisiert triklin in der Raumgruppe P1 (Raumgruppen-Nr. 2) mit den Gitterparametern a= 11.689 Å; b= 16.332 Å; c= 7,598 Å; α = 91.65°; β = 90,0° und γ = 91,9° sowie vier Formeleinheiten pro Elementarzelle (Handbook of Mineralogy Vol. V - Polyhalite, 2003, The Mineralogical Society of America). Größere Vorkommen an Polyhalit findet man in Europa unter anderem in Österreich, Deutschland und Großbritannien sowie außerhalb Europas in den USA, China, Indien, Ukraine, Türkei und Iran.

Aufgrund der Kombination der Pflanzennährstoffe Kalium, Magnesium und Schwefel in Form des Sulfats ist Polyhalit als Mineraldünger geeignet und wirkt sich vorteilhaft auf verschiedene Qualitätskriterien und die Vitalität der damit gedüngten Kulturen aus. Als Düngemittel wird Polyhalit vornehmlich in Form von Produkten mit Korngrößen im Bereich von 2 bis 5 mm angeboten, beispielsweise als Rollagglomerate oder als ein durch mechanisches Zerkleinern von bergmännisch abgebautem Polyhalit hergestelltes Produkt. Beim Zerkleinern des bergmännisch abgebauten Polyhalits fallen größere Mengen an feinteiligem Polyhalit an, bei dem in der Regel wenigstens 80 Gew.-%, insbesondere wenigstens 90 Gew.-% der Polyhalit-Partikel Korngrößen von maximal 2 mm, insbesondere von maximal 1,5 mm aufweisen. Dieses feinteilige Polyhalit ist als Düngemittel weniger geeignet, da es nicht zuletzt aufgrund der geringen Korngröße schwierig zu handhaben ist.

Es besteht daher grundsätzlich ein Bedarf an einem Verfahren, das die Weiterverarbeitung größerer Mengen feinteiligen Polyhalits zu Düngemittelgranulaten erlaubt.

Die DE102013004597 beschreibt ein Verfahren zur Herstellung von Granulaten aus nicht duktilen, sulfatischen Salzen wie Polyhalit oder Langbeinit, bei dem man eine Mischung des feinteiligen Salzes mit einer größeren Menge eines zähflüssigen, zuckerhaltigen Abfallprodukts der Rohr- oder Rübenzuckerherstellung einer Pressgranulierung unterwirft. Hierbei wird die Mischung zunächst zu Schülpen verpresst, die man vor der Zerkleinerung zum fertigen Granulat mehrere Stunden reifen lassen muss, da die Schülpen anfänglich noch sehr weich sind. Die erreichten Festigkeiten sind nicht zufriedenstellend. Zudem erfordert das Verfahren aufgrund der Reifungsphase einen höheren apparativen Aufwand, da die Schülpen nicht direkt weiterverarbeitet werden können sondern zwischengelagert werden müssen.

US 2017/0137333 beschreibt die Herstellung von Polyhalit-Granulaten aus feinteiligem Polyhalit, bei dem man das feinteilige Polyhalit zunächst mit einem Bindemittel, vorzugsweise mit vorgequollener Stärke, vermischt und anschließend mit einem Mischer mit etwa 5 Gew.-% Wasser besprüht, um ein voragglomeriertes Produkt zu erhalten. Dieses voragglomerierte Produkt wird auf einem Pelletier-Teller unter Zusatz von weiterem Wasser zu einem Agglomerat weiterverarbeitet. Um zu ausreichenden Festigkeiten zu gelangen, werden größere Mengen an vorgequollener Stärke benötigt, was erhöhte Produktionskosten zur Folge hat.

Die US 8,551,429 beschreibt ein durch Kalzinierung von bergmännisch abgebautem Polyhalit erhaltenes Salzgemisch (kalziniertes Polyhalit). Beim Kalzinieren verliert das Polyhalit das gebundene Kristallwasser und seine Kristallstruktur verändert sich. Zudem ändert sich das Lösungsverhalten. Während sich nicht kalziniertes Polyhalit in Wasser nur langsam löst, enthält kalziniertes Polyhalit Bestandteile die sich rasch in Wasser lösen. Im Übrigen sind in kalziniertem Polyhalit die relativen Mengenanteile der Elemente K, Ca, Mg und S, letzteres in Form von Sulfat, denen des Polyhalits vergleichbar. Dementsprechend wird in US 8,551,429 kalziniertes Polyhalit zur Gewinnung von Kaliumsulfat vorgeschlagen. Bei dem Verfahren fallen größere Mengen an unlöslichen Calciumsalzen an, die entsorgt werden müssen. Außerdem ist das Verfahren aufgrund des Einsatzes großer Wassermengen aufwendig und unwirtschaftlich.

DE102014014100 offenbart ein Verfahren zur Herstellung von Kaliumsulfat-Granulaten und das hieraus erhaltene Kaliumsulfat-Granulat sowie dessen Verwendung.

Aufgabe der vorliegenden Erfindung ist daher die Bereitstellung eines Verfahrens, das es in einfacher und effizienter Weise erlaubt, größere Mengen feinteiligen Polyhalits zu Düngemittelgranulaten mit ausreichender mechanischer Festigkeit zu verarbeiten. Insbesondere besteht Bedarf an einem Verfahren, welches es erlaubt, unter Verwendung eines Polyhalit basierten Ausgangsmaterials Granulate herzustellen, welche als Düngemittel-aktive Bestandteile Kalium, Magnesium und Sulfat enthalten.

Es wurde überraschenderweise gefunden, dass sich Salzzusammensetzungen, die im Wesentlichen aus feinteiligem, kalzinierten Polyhalit oder aus einem Gemisch aus feinteiligem kalziniertem Polyhalit und feinteiligem Alkalimetallsulfat und/oder Erdalkalisulfat bestehen, das unter Kaliumsulfat, Magnesiumsulfat, dessen Hydraten, Langbeinit und Polyhalit ausgewählt ist, durch eine Aufbauagglomeration in Gegenwart von Wasser zu mechanisch stabilen Granulaten verarbeiten lassen, ohne dass es des Einsatzes von organischen Bindemitteln wie Zucker, Stärke oder dergleichen bedarf. Dies überrascht, da sich die vorgenannten Alkali- und Erdalkalisulfate alleine, d.h. ohne organische Bindemittel, auch unter Zusatz von Wasser nicht zu stabilen Granulaten verarbeiten lassen und auch kalziniertes Polyhalit ohne Zusatz von Wasser nicht zu stabilen Granulaten verarbeitet werden kann. Aufgrund des Ausgangsmaterials enthalten die so hergestellten Granulate die als Düngemittel wirksamen Bestandteile Kalium, Magnesium und Sulfat.

Dementsprechend betrifft die vorliegende Erfindung ein Verfahren zur Herstellung Kalium, Magnesium und Sulfat enthaltender Granulate, umfassend eine Aufbauagglomeration einer Salzzusammensetzung, die im Wesentlichen, d.h. zu wenigstens 80 Gew.- %, insbesondere zu wenigstens 85 Gew.-% und speziell zu wenigstens 90 Gew.-%, bezogen auf die von ungebundenem Wasser verschiedenen Bestandteile der Salzzusammensetzung, aus feinteiligem, kalzinierten Polyhalit oder einem Gemisch aus mindestens 40 Gew.% feinteiligem, kalzinierten Polyhalit und Alkalimetallsulfat und/oder Erdalkalisulfat besteht, das unter Kaliumsulfat, Magnesiumsulfat, dessen Hydraten, Langbeinit und Polyhalit ausgewählt ist, in Gegenwart von Wasser und anschließendes Trocknen des erhaltenen Granulats. Das weitere Alkalimetallsulfat und/oder Erdalkalisulfat, welches unter Kaliumsulfat, Magnesiumsulfat, dessen Hydraten, Langbeinit und Polyhalit ausgewählt ist, wird hier und im Folgenden auch als Salz B bezeichnet.

Das erfindungsgemäße Verfahren erlaubt es, bergmännisch abgebautes Polyhalit in einfacher Weise zu Granulaten zu verarbeiten, ohne dass aufwändige Lösungs- bzw. Extraktionsverfahren oder der Einsatz kostspieliger organischer Bindemittel notwendig sind. Die nach dem erfindungsgemäßen Verfahren erhältlichen Granulate zeichnen sich zudem durch gute mechanische Festigkeit, insbesondere hohe Bruchfestigkeitswerte und geringe Abriebwerte aus. Außerdem weisen die durch das erfindungsgemäße Verfahren erhältlichen Granulate aufgrund ihrer Zusammensetzung einen geringen Halogengehalt auf und gewährleisten ein vorteilhaftes Freisetzungsprofil, da aufgrund der raschen Lösungsgeschwindigkeit des kalzinierten Polyhalits die als Düngemittel wirksamen Bestandteile Magnesium, Kalium und Sulfat direkt zur Verfügung stehen. Sofern zur Herstellung der Granulate auch nicht-kalziniertes Polyhalit eingesetzt wird, das eine vergleichsweise geringere Lösungsgeschwindigkeit aufweist, weisen die nach dem erfindungsgemäßen Verfahren erhältlichen Granulate neben der vorteilhaften Direktwirkung auch eine Langzeitwirkung auf.

Der Begriff "Salzzusammensetzung" bezeichnet hier und im Folgenden die von freiem bzw. ungebundenen Wasser verschiedenen Bestandteile des Substrats, welches der Aufbauagglomeration zugeführt wird, einschließlich gebundenes Kristallwasser. Bei diesem Substrat handelt es sich um ein feinteiliges anorganisches Salz bzw. um ein Gemisch von anorganischen Salzen, das zu wenigstens 80 Gew.-%, insbesondere zu wenigstens 85 Gew.-% und speziell zu wenigstens 90 Gew.-%, aus kalziniertem Polyhalit oder aus einem Gemisch aus mindestens 40 Gew.% kalziniertem Polyhalit und wenigstens einem der vorgenannten Salze B besteht. Die hier angegebenen Angaben in Gew.-% beziehen sich auf die Gesamtmasse der vom ungebundenem Wasser verschiedenen Bestandteile des der Aufbauagglomeration zugeführten Substrats.

Die Begriffe "freies Wasser" und "ungebundenes Wasser" werden hier und im Folgenden synonym verwendet und bezeichnen Wasser, das nicht als Kristallwasser gebunden ist. Letzteres wird auch als gebundenes Wasser bezeichnet.

Unter dem Begriff "feinteilig" in Bezug auf die Salzzusammensetzung sowie in Bezug auf kalziniertes Polyhalit und auf die vorgenannten Salze B versteht man ein für die Herstellung von Granulaten übliches Kornband, bei dem typischerweise wenigstens 80 Gew.-%, insbesondere wenigstens 90 Gew.-% der Salzkörner in der Salzzusammensetzung eine Korngröße von maximal 2 mm, insbesondere maximal 1,5 mm und speziell maximal 1,2 mm aufweisen und vorzugsweise Korngrößen im Bereich von 0,01 bis 2 mm, insbesondere im Bereich von 0,05 bis 1,5 mm, und speziell im Bereich von 0,1 bis 1,2 mm, bestimmt mittels Siebanalyse nach DIN 66165:2016-08, aufweisen. Die mittlere Korngröße (Gewichtsmittel, dso-Wert) der Salzkörner der Salzzusammensetzung liegt typischerweise im Bereich von 50 µm bis 1500 µm, insbesondere im Bereich von 100 µm bis 1200 µm. Der d₉₀-Wert des im erfindungsgemäßen Verfahren eingesetzten Pressguts liegt in der Regel bei maximal 2 mm, insbesondere maximal 1,5 mm und speziell maximal 1,2 mm.

Bei den hier und im Folgenden angegebenen Korngrößen handelt es sich in der Regel um diejenigen Werte, wie sie mittels Siebanalyse nach DIN 66165:2016-08 bestimmt werden. Die Ermittlung der Massenanteile der jeweiligen Korngrößen bzw. Korngrö-ßenbereiche erfolgt nach Maßgabe der DIN 66165:2016-08 durch Fraktionierung des dispersen Guts unter Verwendung von mehreren Sieben mittels maschineller Siebung in vorkalibrierten Systemen. Sofern nichts anderes angegeben ist, sind Prozentangaben im Zusammenhang mit Teilchen- bzw. Korngrößen als Angaben in Gew.-% zu verstehen. In diesem Zusammenhang bezeichnet der d₉₀-Wert diejenige Korngröße, die von 90 Gew.-% der Salzkörner unterschritten wird. Der d₁₀-Wert bezeichnet diejenige Korngröße, die von 10 Gew.-% der Salzkörner unterschritten wird. Der dso-Wert bezeichnet die gewichtsmittlere Korngröße. Die Korngrößenverteilung kann auch durch Laserlichtstreuung (Laserlichtbeugung), beispielsweise nach der in ISO 13320:2009 angegebenen Methode, bestimmt werden, insbesondere im Falle sehr kleiner Partikel mit Partikelgrößen < 200 µm.

Unter "kalziniertem Polyhalit" versteht man ein sulfatisches Salz bzw. Salzgemisch, das durch Kalzinierung von Polyhalit erhalten wird. Das kalzinierte Polyhalit ist auf dem Markt erhältlich oder kann in an sich bekannter Weise durch Kalzinierung von Polyhalit erhalten werden. Üblicherweise erfolgt eine solche Kalzinierung bei Temperaturen von wenigstens 440°C, insbesondere wenigstens 460°C und speziell wenigstens 480°C, z.B. bei Temperaturen im Bereich von 440°C bis 560°C, insbesondere im Bereich von 460 bis 540°C und speziell im Bereich von 480 bis 520°C. Die Kalzinierung wird üblicherweise so lange durchgeführt, bis das erhaltene Material einen Glühverlust, bestimmt durch Glühverlust bei 550°C angelehnt an DIN EN 15935:2012, von nicht mehr als 0,2 Gew.-%, insbesondere nicht mehr als 0,1 Gew.-% aufweist. Die Kalzinierungsdauer hängt naturgemäß von der Feinheit des eingesetzten Polyhalits, der Temperatur und der Art der Kalzinierungsvorrichtung ab und kann vom Fachmann durch Routineversuche ermittelt werden. Üblicherweise liegt die Kalzinierungsdauer im Bereich von 1 bis 60 Minuten, speziell im Bereich von 10 bis 20 Minuten. Geeignete Vorrichtungen für die Kalzinierung sind u.a. Drehrohröfen, Wirbelschichtöfen und Muffelöfen.

Unter Langbeinit versteht man ein Mineral, das einen Gehalt an kristallinem K₂Mg₂[SO₄]₃, von in der Regel wenigstens 85 Gew.-%, insbesondere wenigstens 90 Gew.-% aufweist. Neben dem kristallinen K₂Mg₂[SO₄]₃ kann Langbeinit auch in untergeordnetem Maße andere Alkali- und Erdalkalimetallsalze, insbesondere in Form der Chloride und Sulfate, enthalten. In der Regel handelt es sich bei dem für die Kalzinierung eingesetzten Langbeinit um ein Langbeinit in der auf dem Markt üblichen Qualität.

Unter Polyhalit versteht man ein Mineral, das einen Gehalt an kristallinem K₂Ca₂Mg[SO₄]₄·2H₂O von in der Regel wenigstens 85 Gew.-%, insbesondere wenigstens 90 Gew.-% aufweist. Neben dem kristallinen K₂Ca₂Mg[SO₄]₄·2H₂O kann Polyhalit auch in untergeordnetem Maße andere Alkali- und Erdalkalimetallsalze, insbesondere in Form der Chloride und Sulfate, enthalten. In der Regel handelt es sich bei dem für die Kalzinierung eingesetzten Polyhalit um ein Polyhalit in der auf dem Markt üblichen Qualität. Vorzugsweise ist das für die Kalzinierung eingesetzte Polyhalit ein feinteiliges Polyhalit, insbesondere ein beim Zerkleinern eines bergmännisch abgebauten Polyhalits anfallendes feinteiliges Polyhalit. Bei dem Polyhalit kann es sich aber auch um Rückgut aus einer Herstellung eines Polyhalit-haltigen Granulats handeln.

Das für die Kalzinierung eingesetzte Polyhalit weist ein Kornband auf, bei dem typischerweise wenigstens 80 Gew.-%, insbesondere wenigstens 90 Gew.-% der Salzkörner Polyhalits eine Korngröße von maximal 2 mm, insbesondere maximal 1,5 mm und speziell maximal 1,2 mm aufweisen und vorzugsweise Korngrößen im Bereich von 0,01 bis 2 mm, insbesondere im Bereich von 0,1 bis 1,5 mm, und speziell im Bereich von 0,2 bis 1,2 mm, bestimmt mittels Siebanalyse nach DIN 66165:2016-08, aufweisen. Die mittlere Korngröße (Gewichtsmittel, d₅₀-Wert) des Polyhalits liegt typischerweise im Bereich von 50 µm bis 1500 µm, insbesondere im Bereich von 100 µm bis 1200 µm. Der d₉₀-Wert des Polyhalits liegt in der Regel bei maximal 2 mm, insbesondere maximal 1,5 mm und speziell maximal 1,2 mm.

Typischerweise wird ein für die Kalzinierung eingesetztes Polyhalit etwa folgende Zusammensetzung aufweisen:
Kalium: 11,0 bis 13,0 Gew.-%;
Magnesium: 3,4 bis 4,3 Gew.-%;
Calcium: 11,0 bis 13,5 Gew.-%;
Sulfat: 55,0 bis 64,0 Gew.-%; sowie
gegebenenfalls Natrium: < 2 Gew.-%;
gegebenenfalls Halogen, z.B. Chlorid: < 5 Gew.-%

Außerdem enthält das Polyhalit Kristallwasser, typischerweise in Mengen von 5,0 bis 7,0 Gew.-%. Der Kristallwassergehalt kann über den Glühverlust bei 550°C bestimmt werden. Die Restfeuchte des Polyhalits, bedingt durch anhaftende Feuchtigkeit wird in der Regel 0,5 Gew.-%, bezogen auf das Polyhalit, nicht überschreiten und liegt typischerweise im Bereich von 0,1 bis 0,4 Gew.-%. Der Trocknungsverlust wird typischerweise in Anlehnung an DIN EN 12880:2000 bestimmt, indem man eine Probe des Polyhalits bei Temperaturen im Bereich von 105 ± 5 °C bei Umgebungsdruck bis zur Gewichtskonstanz trocknet.

Da sich das kalzinierte Polyhalit in seiner Zusammensetzung von dem zur Kalzinierung eingesetzten Polyhalit im Wesentlichen nur durch den Verlust von Kristallwasser unterscheidet, weist es dementsprechend typischerweise etwa folgende Zusammensetzung auf:
Kalium: 11,8 bis 14,0 Gew.-%;
Magnesium: 3,6 bis 4,6 Gew.-%;
Calcium: 11,8 bis 14,6 Gew.-%;
Sulfat: 59,0 bis 69,0 Gew.-%;
gegebenenfalls Natrium: < 2,5 Gew.-%;
gegebenenfalls Halogen, z.B. Chlorid: < 6 Gew.-%

Das kalzinierte Polyhalit weist in der Regel ein Kornband auf, das dem für die Kalzinierung eingesetzten Polyhalits vergleichbar ist. Dementsprechend weisen typischerweise wenigstens 80 Gew.-%, insbesondere wenigstens 90 Gew.-% der Salzkörner des kalzinierten Polyhalits eine Korngröße von maximal 2 mm, insbesondere maximal 1,5 mm und speziell maximal 1,2 mm auf und vorzugsweise Korngrößen im Bereich von 0,01 bis 2 mm, insbesondere im Bereich von 0,1 bis 1,5 mm, und speziell im Bereich von 0,2 bis 1,2 mm, bestimmt mittels Siebanalyse nach DIN 66165:2016-08. Die mittlere Korngröße (Gewichtsmittel, d₅₀-Wert) des kalzinierten Polyhalits liegt typischerweise im Bereich von 50 µm bis 1500 µm, insbesondere im Bereich von 100 µm bis 1200 µm. Der d₉₀-Wert des kalzinierten Polyhalits liegt in der Regel bei maximal 2 mm, insbesondere maximal 1,5 mm und speziell maximal 1,2 mm.

Die im erfindungsgemäßen Verfahren eingesetzte Salzzusammensetzung enthält kalziniertes Polyhalit in einer Menge von wenigstens 40 Gew.-%, insbesondere von wenigstens 50 Gew.-%, bezogen auf die von freiem Wasser verschiedenen Bestandteile der Salzzusammensetzung. Sie kann auch ausschließlich aus kalziniertem Polyhalit bestehen, d.h. der Anteil an Polyhalit in der Salzzusammensetzung beträgt dann 100 Gew.- %, bezogen auf die Gesamtmasse der von freiem Wasser verschiedenen Bestandteile der Salzzusammensetzung.

Als weiteren Bestandteil können die im erfindungsgemäßen Verfahren eingesetzten Salzzusammensetzungen ein oder mehrere Salze B, wie zuvor definiert, enthalten. Der Gesamtanteil an dem bzw. den weiteren Salz(en) B, wird 60 Gew.-%, insbesondere 50 Gew.-% nicht überschreiten, wobei die Angaben in Gew.-% auf die Gesamtmasse der von ungebundenem Wasser verschiedenen Bestandteile der Salzzusammensetzung bezogen sind.

Erfindungsgemäß sind die weiteren Salze B ausgewählt unter Kaliumsulfat, Magnesiumsulfat, dessen Hydraten wie die Monohydrate Kieserit und das synthetische Monohydrat, das auch als SMS bezeichnet wird, und das Heptahydrat (Bittersalz bzw. Epsomit), Langbeinit, d.h. K₂Mg₂[SO₄]₃, und nicht kalziniertem Polyhalit. Bevorzugt ist das wenigstens eine weitere Salz B ausgewählt unter Polyhalit, Magnesiumsulfat, speziell in Form von Kieserit oder SMS, Kaliumsulfat und Mischungen davon. Insbesondere ist das wenigstens eine weitere Salz B ausgewählt unter Polyhalit, dessen Mischungen Polyhalit mit wenigstens einem weiteren Salz, das unter Kaliumsulfat, Magnesiumsulfat und dessen Hydraten ausgewählt ist, und insbesondere unter Mischungen von Polyhalit mit Kaliumsulfat und/oder mit Magnesiumsulfat und/oder dessen Hydraten, insbesondere Mischungen von Polyhalit mit Kaliumsulfat, Mischungen von Polyhalit mit Kieserit, Mischungen von Polyhalit mit SMS und Mischungen von Polyhalit mit Kaliumsulfat und mit Kieserit.

Sofern die Salzzusammensetzung zu wenigstens 80 Gew.-%, insbesondere zu wenigstens 85 Gew.-% und speziell zu wenigstens 90 Gew.-%, bezogen auf Gesamtmasse der von freiem Wasser verschiedenen Bestandteile der Salzzusammensetzung, aus einem Gemisch aus kalziniertem Polyhalit und wenigstens einem der vorgenannten Salze B besteht, wird das Massenverhältnis von kalziniertem Polyhalit zu Salz B vorzugsweise einen Wert von 4 : 6 und insbesondere einen Wert von 5 : 5 nicht unterschreiten und liegt insbesondere im Bereich von 4 : 6 bis 95 : 5 und speziell im Bereich von 5 : 5 bis 9 : 1.

Neben den vorgenannten Bestandteilen kann die Salzzusammensetzung in untergeordneter Menge ein oder mehrere Salze enthalten, die typischerweise in sulfatischen Düngemittelgranulaten enthalten sein können. Zu den weiteren Salzen zählen beispielsweise Chloride des Natriums, Kaliums oder Magnesiums wie Kaliumchlorid, Natriumchlorid und Magnesiumchlorid, weiterhin auch Natriumsulfat, MgO, MgCOa und CaCO₃ sowie salzartige Mikronährstoffe. Diese weiteren Bestandteile können dem kalziniertem Polyhalit bzw. dem Gemisch von kalziniertem Polyhalit mit dem Salz B zugesetzt werden oder Verunreinigungen sein, die im kalzinierten Polyhalit bzw. im Salz B enthalten sind. Der Anteil der weiteren Salze wird 20 Gew.-%, insbesondere 15 Gew.- % und speziell 10 Gew.-%, bezogen auf Gesamtmasse der von freiem Wasser verschiedenen Bestandteile der Salzzusammensetzung, nicht überschreiten.

Außerdem kann die Salzzusammensetzung salzartige Mikronährstoffe, wie sie häufig in Düngemitteln verwendet werden, enthalten. Zu den salzartigen Mikronährstoffen zählen salzartige Borverbindungen sowie Salze und Komplexverbindungen der Elemente Mangan, Zink, Kupfer, Eisen und Molybdän. Mangan, Kupfer und Zink werden dabei vorzugsweise in Form ihrer Sulfate eingesetzt. Kupfer und Eisen werden vorzugsweise auch in Form von Chelaten, z. B. mit EDTA, eingesetzt. Bor wird vorzugsweise als Calcium-Natrium-Borat, z. B. in Form von Ulexit, Natriumborat, Kaliumborat oder Borsäure eingesetzt. Molybdän wird vorzugsweise als Natrium- oder Ammoniummolybdat oder als Mischung davon eingesetzt. Typischerweise wird der Anteil an von Bor verschiedenen Mikronährstoffen, gerechnet in ihrer elementaren Form, 1 Gew.-%, bezogen auf die Gesamtmasse der Salzmischung, nicht überschreiten. Der Gehalt an Bor, gerechnet als B₂O₃ wird in der Regel 3 Gew.-% nicht überschreiten und liegt typischerweise, sofern enthalten, im Bereich von 0,01 bis 3 Gew.-%, insbesondere 0,01 bis 2 Gew.-%, bezogen auf die Gesamtmasse der von freiem Wasser verschiedenen Bestandteile der Salzzusammensetzung.

Weiterhin kann die zur Aufbauagglomeration eingesetzte Salzzusammensetzung auch organische Bindemittel enthalten, beispielsweise Tylose, Melasse, Gelatine, Stärke, Ligninsulfonate oder Salze von Polycarbonsäuren wie Natriumcitrat oder Kaliumcitrat oder Fettsäuresalze wie Calciumstearat. Der Anteil der organischen Bindemittel wird typischerweise 1 Gew.-% nicht überschreiten und beträgt insbesondere weniger als 0,5 Gew.-% und speziell weniger als 0,1 Gew.-%, jeweils bezogen auf die Gesamtmasse der von freien Wasser verschiedenen Bestandteile der Salzzusammensetzung. Insbesondere enthält die zur Aufbauagglomeration eingesetzte Salzzusammensetzung keine oder nicht mehr als 0,05 Gew.-% organische Bindemittel, bezogen auf die Gesamtmasse der von freiem Wasser verschiedenen Bestandteile der Salzzusammensetzung.

In einer ersten bevorzugten Ausführungsform der Erfindung besteht die zur Aufbauagglomeration eingesetzte Salzzusammensetzung zu wenigstens 80 Gew.-%, insbesondere zu wenigstens 85 Gew.-%, und speziell zu wenigstens 90 Gew.-%, bezogen auf die Gesamtmasse der von freiem Wasser verschiedenen Bestandteile der Salzzusammensetzung, aus kalziniertem Polyhalit. Weitere, optionale Bestandteile der in dieser Ausführungsform eingesetzten Salzzusammensetzung können die zuvor genannten weiteren Salze, sowie die zuvor genannten Verunreinigungen und Mikronährstoffe sein.

In einer zweiten bevorzugten Ausführungsform der Erfindung besteht die zur Aufbauagglomeration eingesetzte Salzzusammensetzung zu wenigstens 80 Gew.-%, insbesondere zu wenigstens 85 Gew.-%, und speziell zu wenigstens 90 Gew.-%, bezogen auf die Gesamtmasse der von freiem Wasser verschiedenen Bestandteile der Salzzusammensetzung, aus einem Gemisch aus Polyhalit mit kalziniertem Polyhalit. In dieser Ausführungsform wird das Massenverhältnis von kalziniertem Polyhalit zu nicht kalziniertem Polyhalit vorzugsweise einen Wert von 4 : 6 und insbesondere einen Wert von 5 : 5 nicht unterschreiten und liegt insbesondere im Bereich von 4 : 6 bis 95 : 5 und speziell im Bereich von 5 : 5 bis 9 : 1. Weitere, optionale Bestandteile der in dieser Ausführungsform eingesetzten Salzzusammensetzung können die zuvor genannten weiteren Salze, sowie die zuvor genannten Verunreinigungen und Mikronährstoffe sein.

In einer dritten bevorzugten Ausführungsform der Erfindung besteht die zur Aufbauagglomeration eingesetzte Salzzusammensetzung zu wenigstens 80 Gew.-%, insbesondere zu wenigstens 85 Gew.-%, und speziell zu wenigstens 90 Gew.-%, bezogen auf die Gesamtmasse der von freiem Wasser verschiedenen Bestandteile der Salzzusammensetzung, aus einem Gemisch aus kalziniertem Polyhalit und Kaliumsulfat. Erfindungsgemäß wird der Anteil an kalziniertem Polyhalit in der Salzzusammensetzung wenigstens 40 Gew.-%, insbesondere wenigstens 45 Gew.-% und speziell wenigstens 50 Gew.-%, bezogen auf die Gesamtmasse der von freiem Wasser verschiedenen Bestandteile der Salzzusammensetzung, ausmachen. Der Anteil an Kaliumsulfat wird vorzugsweise im Bereich von 10 bis 60 Gew.-%, insbesondere im Bereich von 15 bis 55 Gew.-% und speziell im Bereich von 20 bis 50 Gew.-% liegen, jeweils bezogen auf die Gesamtmasse der in der Salzzusammensetzung enthaltenen Salze, einschließlich des in den Salzen gebundenen Kristallwassers. Weitere, optionale Bestandteile der in dieser Ausführungsform eingesetzten Salzzusammensetzung können die zuvor genannten weiteren Salze, sowie die zuvor genannten Verunreinigungen und Mikronährstoffe sein.

In einer vierten bevorzugten Ausführungsform der Erfindung besteht die zur Aufbauagglomeration eingesetzte Salzzusammensetzung zu wenigstens 80 Gew.-%, insbesondere zu wenigstens 85 Gew.-%, und speziell zu wenigstens 90 Gew.-%, bezogen auf die Gesamtmasse der von freiem Wasser verschiedenen Bestandteile der Salzzusammensetzung, aus einem Gemisch aus kalziniertem Polyhalit und Magnesiumsulfat, einschließlich seiner Hydrate, wie Magnesiumsulfat-Monohydrat z.B. Kieserit oder künstliches Magnesiumsulfat-Monohydrat (SMS) und Magnesiumsulfat-Heptahydrat (Epsomit bzw. Bittersalz). Insbesondere wird in dieser Ausführungsform das Magnesiumsulfat in Form des Monohydrats (Kieserit und/oder SMS) eingesetzt. Der Anteil an Magnesiumsulfat bzw. seines Hydrats wird vorzugsweise im Bereich von 10 bis 60 Gew.-%, insbesondere im Bereich von 15 bis 55 Gew.-% und speziell im Bereich von 20 bis 50 Gew.-% liegen, jeweils bezogen auf die Gesamtmasse der in der Salzzusammensetzung enthaltenen Salze, einschließlich des in den Salzen gebundenen Kristallwassers. Weitere, optionale Bestandteile der in dieser Ausführungsform eingesetzten Salzzusammensetzung können die zuvor genannten weiteren Salze, sowie die zuvor genannten Verunreinigungen und Mikronährstoffe sein. Gewichtsangaben in Bezug auf Magnesiumsulfat beziehen sich jeweils auf das eingesetzte Salz, d.h. bei Hydraten auf das Hydrat.

In einer fünften bevorzugten Ausführungsform der Erfindung besteht die zur Aufbauagglomeration eingesetzte Salzzusammensetzung zu wenigstens 80 Gew.-%, insbesondere zu wenigstens 85 Gew.-%, und speziell zu wenigstens 90 Gew.-%, bezogen auf die Gesamtmasse der von freiem Wasser verschiedenen Bestandteile der Salzzusammensetzung, aus einem Gemisch aus Polyhalit (d.h. nicht kalziniertem Polyhalit), kalziniertem Polyhalit und Kaliumsulfat. Erfindungsgemäß wird der Anteil an kalziniertem Polyhalit in der Salzzusammensetzung wenigstens 40 Gew.-%, insbesondere wenigstens 45 Gew.-% und speziell wenigstens 50 Gew.-%, bezogen auf die Gesamtmasse der von freiem Wasser verschiedenen Bestandteile der Salzzusammensetzung, ausmachen. Die Gesamtmenge an nicht kalziniertem Polyhalit und Kaliumsulfat wird vorzugsweise im Bereich von 10 bis 60 Gew.-%, insbesondere im Bereich von 15 bis 55 Gew.-% und speziell im Bereich von 20 bis 50 Gew.-% liegen, jeweils bezogen auf die Gesamtmasse der in der Salzzusammensetzung enthaltenen Salze, einschließlich des in den Salzen gebundenen Kristallwassers. Die Menge an Kaliumsulfat beträgt insbesondere wenigstens 5 Gew.-%, und speziell wenigstens 10 Gew.-%, jeweils bezogen auf die Gesamtmasse der in der Salzzusammensetzung enthaltenen Salze, einschließlich des in den Salzen gebundenen Kristallwassers. In dieser Ausführungsform wird das Massenverhältnis von Polyhalit zu Kaliumsulfat insbesondere im Bereich von 1 : 10 bis 10 : 1 und speziell im Bereich von 1 : 5 bis 5 : 1 liegen. Weitere, optionale Bestandteile der in dieser Ausführungsform eingesetzten Salzzusammensetzung können die zuvor genannten weiteren Salze, sowie die zuvor genannten Verunreinigungen und Mikronährstoffe sein.

In einer sechsten bevorzugten Ausführungsform der Erfindung besteht die zur Aufbauagglomeration eingesetzte Salzzusammensetzung zu wenigstens 80 Gew.-%, insbesondere zu wenigstens 85 Gew.-%, und speziell zu wenigstens 90 Gew.-%, bezogen auf die Gesamtmasse der von freiem Wasser verschiedenen Bestandteile der Salzzusammensetzung, aus einem Gemisch aus Polyhalit, kalziniertem Polyhalit und Magnesiumsulfat, einschließlich seiner Hydrate, wie Magnesiumsulfat-Monohydrat z.B. Kieserit oder künstliches Magnesiumsulfat-Monohydrat (SMS) und Magnesiumsulfat-Heptahydrat (Epsomit bzw. Bittersalz). Insbesondere wird in dieser Ausführungsform das Magnesiumsulfat in Form des Monohydrats (Kieserit und/oder SMS) eingesetzt. Die Gesamtmenge an Polyhalit und Magnesiumsulfat bzw. seines Hydrats wird vorzugsweise im Bereich von 10 bis 60 Gew.-%, insbesondere im Bereich von 15 bis 55 Gew.- % und speziell im Bereich von 20 bis 50 Gew.-% liegen, jeweils bezogen auf die Gesamtmasse der in der Salzzusammensetzung enthaltenen Salze, einschließlich des in den Salzen gebundenen Kristallwassers. Die Menge an Magnesiumsulfat bzw. seines Hydrats beträgt insbesondere wenigstens 5 Gew.-%, und speziell wenigstens 10 Gew.- %, jeweils bezogen auf die Gesamtmasse der in der Salzzusammensetzung enthaltenen Salze, einschließlich des in den Salzen gebundenen Kristallwassers. In dieser Ausführungsform wird das Massenverhältnis von Polyhalit zu Magnesiumsulfat bzw. seines Hydrats insbesondere im Bereich von 1 : 10 bis 10 : 1 und speziell im Bereich von 1 : 5 bis 5 : 1 liegen. Weitere, optionale Bestandteile der in dieser Ausführungsform eingesetzten Salzzusammensetzung können die zuvor genannten weiteren Salze, sowie die zuvor genannten Verunreinigungen und Mikronährstoffe sein. Gewichtsangaben in Bezug auf Magnesiumsulfat beziehen sich jeweils auf das eingesetzte Salz, d.h. bei Hydraten auf das Hydrat.

Erfindungsgemäß erfolgt die Aufbauagglomeration in Gegenwart von Wasser. Hierdurch wird die gewünschte Festigkeit der Granulate erreicht und der Abrieb verringert. Vorzugweise wird man die Aufbauagglomeration in Gegenwart von 5 bis 20 Gew.-%, insbesondere 7 bis 17 Gew.-% Wasser durchführen, wobei die Angaben zur Wassermenge auf die die von freiem bzw. ungebundenem Wasser verschiedenen Bestandteile der Salzzusammensetzung bezogen sind. Hierbei kann man so vorgehen, dass man das Wasser vor und/oder während der Aufbauagglomeration der Salzzusammensetzung zugibt.

Häufig wird man jedoch die Salzzusammensetzung zunächst durch Zusatz von Wasser anfeuchten und dann die angefeuchtete Salzzusammensetzung in der Aufbauagglomeration einsetzen. Insbesondere wird man der Aufbauagglomeration eine mit Wasser angefeuchtete Salzzusammensetzung zuführen, die vorzugsweise 2 bis 20 Gew.-%, insbesondere 3 bis 15 Gew.-% Wasser, bezogen auf die von freiem Wasser verschiedenen Bestandteile der Salzzusammensetzung, enthält. Gegebenenfalls wird man bei der Zugabe des Wassers etwaige Restfeuchten der Salzzusammensetzung, die auch als Trockenverlust bezeichnet werden, berücksichtigen, so dass die angegebenen Obergrenzen für die zugesetzte Wassermenge von 20 Gew.-%, bzw. 17 Gew.-% oder 15 Gew.-% auf die Gesamtmasse der festen, d.h. von ungebundenem Wasser verschiedenen Bestandteile der Salzzusammensetzung, einschließlich des gebundenen Kristallwassers, bezogen sind und die Obergrenzen das nicht gebundene Wasser (Trockenverlust) mit umfassen. Mit anderen Worten die Gesamtmenge des zum Befeuchten zugesetzten Wassers und Restfeuchte wird in der Regel 20 Gew.-%, bzw. 17 Gew.-% oder 15 Gew.-% bezogen auf die Gesamtmasse der von freiem Wasser verschiedenen Bestandteile der Salzzusammensetzung, nicht überschreiten.

Die Bereitstellung der befeuchteten Salzzusammensetzung erfolgt in an sich bekannter Weise durch Vermischen der Bestandteile der Salzzusammensetzung mit Wasser in den gewünschten Mengenanteilen in hierfür geeigneten Vorrichtungen. Geeignete Vorrichtungen für das Vermengen der Komponenten der Salzzusammensetzung und des Wassers sind Fallmischer mit und ohne Einbauten wie Trommelmischer und Ringmischer, Schaufelmischer wie Trogmischer, Pflugschaufelmischer und Doppelwellenmischer sowie Schneckenmischer. Wenn die Salzzusammensetzung neben dem kalzinierten Polyhalit weitere Bestandteile enthält, kann man auch so vorgehen, dass man das kalzinierte Polyhalit mit dem bzw. den weiteren Bestandteil(en) vermischt und dann das Gemisch mit Wasser befeuchtet.

Das Befeuchten der Salzzusammensetzung kann unmittelbar vor der Aufbauagglomeration, z.B. unmittelbar vor dem Einbringen der Salzzusammensetzung in die zur Aufbauagglomeration verwendete Vorrichtung erfolgen. Häufig wird man jedoch das Wasser mit der Salzzusammensetzung vermischen und die so befeuchtete Salzzusammensetzung der Aufbauagglomeration zuführen. Das Wasser kann der Salzzusammensetzung zugegeben werden, das bereits alle für die Aufbauagglomeration benötigten Komponenten enthält. Man kann aber auch die Zugabe des Wassers und das Vermischen der festen Bestandteile der Salzzusammensetzung kombinieren, beispielsweise indem man das Wasser während des Vermischens der festen Bestandteile der Salzzusammensetzung zusetzt oder das Wasser in Form einer Lösung eines der festen Bestandteile, z.B. eines Mikronährstoffs oder eines Bindemittels, zusetzt. Der Zusatz des Wassers kann in an sich bekannter Weise, z.B. durch Aufsprühen auf die festen Bestandteile der Salzzusammensetzung in hierfür geeigneten Vorrichtungen, z.B. in einer der oben genannten Mischvorrichtungen erfolgen.

Weiterhin hat es sich für die Festigkeit der Granulate von Vorteil erwiesen, wenn man eine Teilmenge des Wassers, vorzugsweise nicht mehr als 70 Gew.-%, insbesondere nicht mehr als 60 Gew.-% der Gesamtmenge des in der Aufbauagglomeration eingesetzten Wassers, z.B. 5 bis 70 Gew.-%, insbesondere 10 bis 60 Gew.-%, während der Aufbauagglomeration der Salzzusammensetzung zusetzt. Bezogen auf die Gesamtmasse der von freiem, ungebundenem Wasser verschiedenen Bestandteile der Salzzusammensetzung liegt die Wassermenge, die der Salzzusammensetzung während der Aufbauagglomeration zugesetzt wird, vorzugsweise im Bereich von 2 bis 10 Gew.- %.

Die eigentliche Durchführung der Aufbauagglomeration kann in Analogie zu den aus dem Stand der Technik bekannten Agglomerationsverfahren erfolgen, die beispielsweise in Wolfgang Pietsch, Agglomeration Processes, Wiley - VCH, 1. Auflage, 2002, in G. Heinze, Handbuch der Agglomerationstechnik, Wiley - VCH, 2000 sowie in Perry's Chemical Engineers' Handbook, 7. Auflage, McGraw-Hill, 1997, 20-73 bis 20-80 beschrieben sind. Hier und im Folgenden werden die Begriffe Aufbauagglomeration und Aufbaugranulierung synonym verwendet.

Bei der erfindungsgemäßen Granulierung mittels Aufbauagglomeration werden die Partikel der Salzzusammensetzung, insbesondere der mit Wasser befeuchteten Salzzusammensetzung, während des Granulierungsvorgangs in Bewegung versetzt und gegebenenfalls mit weiterem Wasser behandelt. Hierbei agglomerieren die Partikel der Salzzusammensetzung zu größeren Partikeln. Durch die Anwesenheit von Wasser bilden sich Flüssigkeitsbrücken zwischen den Partikeln aus, die zu einer Haftung der Partikel führen. Man nimmt an, dass die Anwesenheit von Wasser ein Anlösen der Salzpartikel der Salzzusammensetzung bewirkt und zur Bildung von Materialbrücken zwischen den Partikeln führt. Gleichzeitig wird durch die erzwungene Bewegung der Partikel und die damit eingetragen kinetische Energie größerer Agglomerate die Bildung vergleichsweise einheitlich großer Agglomerate gefördert.

Die Aufbauagglomeration kann beispielsweise als Roll-, Misch- oder Fließbettagglomeration vorgenommen worden. Geeignet sind auch Kombinationen dieser Maßnahmen, z.B. eine Kombination aus Misch- und Rollagglomeration oder eine Kombination aus Roll-, Misch- und Fließbettagglomeration. Vorzugsweise umfasst die erfindungsgemäße Aufbauagglomeration eine Rollagglomeration.

Bei der Rollagglomeration gibt man die partikuläre Salzzusammensetzung, die vorzugsweise zuvor befeuchtet wurde, in ein Gefäß mit geneigter Drehachse und kreisförmigen Querschnitt, vorzugweise einem Granulierteller bzw. Pelletierteller oder einer Granuliertrommel. Durch Rotieren des Gefäßes werden die Partikel der Salzzusammensetzung in Bewegung versetzt und der Granuliervorgang eingeleitet. Beim Befeuchten der Salzzusammensetzung kommt es in der Regel bereits zur Bildung von unregelmäßig geformten Agglomeraten, die dann bei der Rollagglomeration in regelmäßiger geformte Agglomerate umgewandelt werden.

Eine etwaige weitere Behandlung mit Wasser während der Aufbauagglomeration erfolgt wie zuvor beschrieben, wobei die Zugabe des Wassers vorzugsweise möglichst gleichmäßig, insbesondere in fein verteilter Form, z.B. durch Aufsprühen bzw. in zerstäubter Form, auf die in Bewegung versetzte Salzzusammensetzung erfolgt. Hierzu wird man üblicherweise das Wasser mittels ein oder mehrerer geeigneter Zerstäuber, z.B. feststehende oder rotierende Düsen, versprühen bzw. zerstäuben.

Vorzugsweise erfolgt die Aufbauagglomeration, insbesondere die Rollagglomeration bei Temperaturen im Bereich von 10 bis 90 °C, insbesondere bei Umgebungstemperatur bzw. im Bereich von 15 bis 40 °C.

Im Anschluss an die eigentliche Aufbauagglomeration erfolgt typischerweise eine Trocknung des feuchten Granulats.

Für die mechanische Stabilität der Granulate hat es sich als vorteilhaft erwiesen, wenn man die Trocknung so durchführt, dass das erhaltene Granulat eine Restfeuchte von wenigstens 0,2 Gew.-%, insbesondere wenigstens 0,5 Gew.-% und speziell 0,9 Gew.- % aufweist. Die Restfeuchte wird analog dem Trocknungsverlust in Anlehnung an DIN EN 12880:2000 bestimmt, indem man eine Probe des Granulats bei Temperaturen im Bereich von 105 ± 5 °C bei Umgebungsdruck bis zur Gewichtskonstanz trocknet. Vorzugsweise wird man die Trocknung soweit führen, dass das erhaltene Granulat eine Restfeuchte von maximal 10 Gew.-%, insbesondere maximal 9 Gew.-% und speziell maximal 8 Gew.-% aufweist.

Die Trocknung erfolgt in der Regel, indem man Gasstrom, z.B. Frischluft, durch das Granulat leitet, oder durch Wärmezufuhr oder durch eine Kombination dieser Maßnahmen. Geeignete Vorrichtungen hierfür sind insbesondere bei Normaldruck arbeitende Trockner wie Kanal-, Band-, Etagen-, Walzen-, Trommel-, Röhren-, und Schaufeltrockner sowie Fließbett- bzw. Wirbelschicht-Trockner.

Die Trocknung erfolgt üblicherweise bei Temperaturen im Bereich von 50 bis 200 °C, insbesondere im Bereich von 60 bis 180 °C. Vorzugweise erfolgt die Trocknung bei Umgebungsdruck.

Vorzugsweise wird die Trocknung als Trocknung in der Wirbelschicht durchgeführt. Bei der Wirbelschichttrocknung oder Fließbetttrocknung wird das Granulat durch einen der Schwerkraft entgegen gerichteten Gasstrom, insbesondere durch einen Luftstrom, in der Schwebe gehalten. Verfahren und Vorrichtungen hierfür sind dem Fachmann grundsätzlich bekannt und können in analoger Weise angewendet werden (siehe z.B. Vauck/Müller Grundoperationen chemischer Verfahrenstechnik, 10. Auflage, Deutscher Verlag für Grundstoffindustrie Leipzig Stuttgart, 1993, S. 682 ff.; Vanecek, Fluidized Bed Drying, Leonahard Hill Books, London 1976; Perry's Chemical Engineers' Handbook, 7. Auflage, McGraw-Hill, 1997, 17-2 ff.). Vorzugweise wird man einen angewärmten Gasstrom, insbesondere einen angewärmten Luftstrom verwenden. Die Temperatur des Gas- bzw. Luftstroms wird dabei vorzugsweise so gewählt, dass die Temperatur des Granulats während des Trocknungsvorgangs im Bereich von 50 bis 200 °C, insbesondere im Bereich von 60 bis 180 °C liegt.

In der Regel schließt sich dem eigentlichen Granuliervorgang, d.h. der Aufbauagglomeration und Trocknung, eine Klassierung des Granulates an. Hierbei erfolgt eine Auftrennung des Granulates in Granulate mit der spezifikationsgerechten Korngröße, kleineren Granulaten, d.h. Feinanteil bzw. Unterkorn, und gegebenenfalls gröberen Granulaten, d.h. Grobanteil bzw. Überkorn. Spezifikationsgerecht ist insbesondere ein Granulat, in dem wenigstens 90 Gew.-% der Granulatpartikel eine Partikelgröße beziehungsweise einen Partikeldurchmesser im Bereich von 1 bis 8 mm, häufig 2 bis 6 mm und insbesondere im Bereich von 2 bis 5 mm aufweisen. Die Klassierung kann nach üblichen Verfahren erfolgen, insbesondere durch Sieben.

Das bei der Klassierung anfallende, nicht spezifikationsgerechte Granulat-Material, das sogenannte Rückgut, wird in der Regel in den Prozess zurückgeführt. Das Unterkorn kann direkt in den Prozess zurückgeführt werden. Das Überkorn wird in der Regel vor der Rückführung auf eine für die Aufbauagglomeration geeignete Partikelgröße vermahlen oder einer anderen Anwendung zugeführt.

Das so erhaltene spezifikationsgerechte Granulat kann in an sich bekannter Weise konfektioniert, z. B. verpackt und transportiert werden.

In einer bevorzugten Ausführungsform der Erfindung wird man das bei der Aufbauagglomeration anfallende Granulat nach der Trocknung und vor der Konfektionierung einer Nachbehandlung mit Wasser unterwerfen. Sofern das Granulat klassiert wird, kann die Nachbehandlung sowohl vor als auch nach der Klassierung durchgeführt werden.

Für die Nachbehandlung wird man das Granulat mit einer geringen Wassermenge befeuchten. Die Wassermenge wird in der Regel so gewählt, dass sie vom Granulat vollständig adsorbiert wird. Vorzugsweise wird man zur Nachbehandlung das Wasser in einer Menge von 0,1 bis 4,0 Gew.-%, insbesondere 0,2 bis 3,0 Gew.-% und speziell 0,5 bis 2,5 Gew.-%, bezogen auf die Masse des fertigen, unbehandelten Granulats einsetzen. Häufig wird man die Wassermenge für die Nachbehandlung so wählen, dass die Gesamtmenge an freiem Wasser im behandelten Granulat, d.h. Wasser, das nicht als Kristallwasser gebunden vorliegt, im Bereich von 0,2 bis 10 Gew.-%, insbesondere 0,5 bis 9 Gew.-% und speziell 0,9 bis 8 Gew.-%, bezogen auf die Gesamtmasse des frisch hergestellten Granulats liegt.

Für die Nachbehandlung wird man in der Regel so vorgehen, dass man das Wasser möglichst gleichmäßig, insbesondere in fein verteilter Form, z.B. durch Aufsprühen bzw. in zerstäubter Form, auf das fertige Granulat aufbringt. Hierzu wird man üblicherweise das Wasser mittels ein oder mehrerer geeigneter Zerstäuber, z.B. feststehende oder rotierende Düsen, versprühen bzw. zerstäuben. Hierbei hat es sich als vorteilhaft erwiesen, wenn das Granulat während des Aufbringens des Wassers, insbesondere des zerstäubten Wassers, bewegt wird, um einen gleichmäßigeren Auftrag des Wassers auf die Oberfläche der Granulat-Partikel zu erzielen. Insbesondere wird man so vorgehen, dass man das Granulat in einer Relativbewegung durch einen Sprühkegel oder einen Sprühvorhang aus mehreren sich überlagernden Sprühkegeln führt. Beispielsweise kann man zum Aufbringen des Wassers so vorgehen, dass man das Granulat mittels eines Transportbands durch einen Bereich führt, in dem Wasser versprüht bzw. zerstäubt wird, beispielsweise indem man einen oder mehrere Sprühkegel oder einen oder mehrere Sprühvorhänge auf dem sich bewegenden Transportband erzeugt. Auch kann man beispielsweise am Übergabepunkt zwischen zwei Transportbändern einen Bereich, in dem Wasser versprüht bzw. zerstäubt wird, erzeugen. Hierdurch wird ein besonders gleichmäßiges Aufbringen des Wassers auf die Oberfläche der Granulat-Partikel erreicht. Grundsätzlich ist es auch möglich, das Wasser in Mischvorrichtungen, beispielsweise Fallmischer mit und ohne Einbauten wie Trommelmischer und Ringmischer, Schaufelmischer wie Trogmischer, Pflugschaufelmischer und Doppelwellenmischer, auf die Oberfläche der Granulat-Partikel aufzubringen.

Das für die Aufbauagglomeration und/oder für die Nachbehandlung des Granulats verwendete Wasser kann grundsätzlich reines, z.B. entionisiertes Wasser, aber auch Leitungswasser oder Prozesswasser sein.

Gegebenenfalls kann sich der Nachbehandlung ein Trocknungsschritt und evtl. ein Kühlungsschritt anschließen, beispielsweise, indem man einen Gasstrom, z.B. Frischluft, durch das Granulat leitet oder durch Wärmezufuhr oder durch eine Kombination dieser Maßnahmen.

Die nach dem erfindungsgemäßen Verfahren erhältlichen Granulate zeichnen sich durch eine für Düngemittelgranulate ausreichende Festigkeit und damit durch eine geringere Empfindlichkeit gegenüber mechanischer Belastung aus, wie sie beispielsweise beim Ein- oder Ausspeichern oder beim Umschlagen oder Transportieren der Granulate auftreten. Dies äußert sich in einer geringeren Kornzerstörung und einer geringeren Staubbildung durch Abrieb, d.h. von Partikeln mit Korngrößen unterhalb 1 mm. Daher neigen erfindungsgemäß erhaltene Granulate bei der Lagerung, insbesondere unter Druck, wie er in Haufwerken oder bei der Lagerung in Silos auftritt, in geringerem Ausmaß zum Verbacken. Überraschenderweise bleibt die verbesserte mechanische Festigkeit der Granulate auch bei Lagerung über längere Zeiträume erhalten, so dass die beim Ausspeichern bzw. beim Umschlag auftretenden mechanischen Belastungen bei den erfindungsgemäß erhaltenen Granulaten auch nach längerer Lagerung zu einer geringeren Kornzerstörung führen.

Aufgrund der verwendeten Einsatzstoffe bestehen die erfindungsgemäß erhältlichen Granulate im Wesentlichen, d.h. zu wenigstens 85 Gew.-% insbesondere zu wenigstens 90 Gew.-%, bezogen auf die von ungebundenem Wasser verschiedenen Bestandteile des Granulats, aus Kalium, Magnesium, Calcium und Sulfat. Insbesondere enthalten die Granulate Kalium, Magnesium, Calcium und Sulfat in den folgenden Mengenanteilen in Gew.-%, bezogen auf die Gesamtmasse der von freiem Wasser verschiedenen Bestandteile des Granulats:
- Kalium in einer Menge von 10,0 bis 15,0 Gew.-%, insbesondere 10.8 bis 12,2 Gew.-%;
- Magnesium in einer Menge von 3,0 bis 5,0 Gew.-%, insbesondere 3,5 bis 4,5 Gew.-%
- Calcium in einer Menge von 10,0 bis 15,0 Gew.-%, insbesondere 11.9 bis 13,6 Gew.-% und
- Sulfat in einer Menge von 50,0 bis 70,0 Gew.-%, insbesondere 55,0 bis 62,1 Gew.-%.

Für die Verwendung in Düngemitteln ist es von Vorteil, wenn weniger als 10 Gew.-% der Granulatpartikel, im Folgenden Granalien, der erfindungsgemäß erhältlichen Granulate eine Korngröße unterhalb 2 mm aufweisen. Häufig weisen wenigstens 60 Gew.- %, insbesondere wenigstens 80 Gew.-% und speziell wenigstens 90 Gew.-% der Granalien eine Korngröße von nicht mehr als 5 mm auf. Vorzugsweise liegt die Korngröße der Granalien zu wenigstens 60 Gew.-%, insbesondere zu wenigstens 80 Gew.- % und speziell zu wenigstens 90 Gew.-% im Bereich von 2 bis 5 mm. Vorzugsweise weisen die erfindungsgemäß erhältlichen Granulate einen geringen Anteil von Partikeln mit einer Partikelgröße bzw. Korngröße unterhalb 1 mm auf. Insbesondere beträgt der Anteil an Granalien mit einer Korngröße unterhalb 1 mm weniger als 10 Gew.-%, insbesondere weniger als 5 Gew.-%. Die Verteilung der Korngrößen der Granalien der erfindungsgemäß erhältlichen Granulate kann in an sich bekannter Weise durch Siebanalyse nach Maßgabe der DIN 66165:2016-08 durch Fraktionierung des Granulats unter Verwendung von mehreren Sieben mittels maschineller Siebung in vorkalibrierten Systemen bestimmt werden. Die Größenangaben beziehen sich auf den Durchmesser der Granalien.

Die erfindungsgemäß erhältlichen Granulate sind daher nicht nur aufgrund ihrer Bestandteile, insbesondere aufgrund der gleichzeitigen Anwesenheit von Kalium, Magnesium und Sulfat und dem geringen Anteil an Halogen sondern auch aufgrund ihrer mechanischen Festigkeit als Düngemittel geeignet. Dementsprechend können die erfindungsgemäß erhältlichen Granulate insbesondere in den für Kalium-haltige und Sulfathaltige Düngemittel üblichen Düngemittelanwendungen eingesetzt werden. Somit ist es möglich, durch Wahl des Mengenverhältnisses von Polyhalit zu dem weiteren Sulfat die Freisetzungscharakteristik der düngemittelaktiven Bestandteile des Granulats zu steuern und gezielt einzustellen. Mit anderen Worten, ein hoher Anteil an Salz B führt im Vergleich zu Granulaten aus Polyhalit zu einer rascheren Freisetzung der düngemittelaktiven Bestandteile. Anders als Düngemittelgranulate aus Polyhalit eignen sich die erfindungsgemäßen Granulate als Dünger mit rascher Direktwirkung.

Die folgenden Beispiele dienen der Erläuterung der Erfindung.

### Abkürzungen:

BF: Bruchfestigkeit/Berstfeste
Bsp.: Beispiel
Calc. Poly: kalziniertes Polyhalit
n.b.: nicht bestimmt
Poly: Polyhalit
TV: Trockenverlust

Die Bestimmung der Korngrößenverteilung erfolgte auf einer analytischen Vibrationssiebmaschine (Typ Retsch AS 200 control).

Der Trockenverlust TV wurde in Anlehnung an DIN EN 12880:2000 bestimmt, indem man eine Probe von etwa 30 g in einem Trockenschrank bei Temperaturen im Bereich von 105 ± 5 °C bei Umgebungsdruck 2 h trocknete und das Gewicht der Probe vor und nach der Trocknung bestimmte.

Der Glühverlust wurde in Anlehnung an die DIN EN 15935:2012 (mit dem Unterschied, dass zuvor nicht bei 105 °C getrocknet wurde), indem man eine Probe von etwa 2000 g in einem Muffelofen bei Temperaturen im Bereich von 550 ± 25 °C bei Umgebungsdruck 2 h glühte und das Gewicht der Probe vor und nach dem Glühen bestimmte.

Die Berstfeste bzw. Bruchfestigkeit wurde mit Hilfe des Tabletten-Bruchfestigkeitstesters Typ TBH 425D der Firma ERWEKA auf Basis von Messungen an 56 Einzelgranalien unterschiedlicher Partikelgröße (Fraktion 2,5 - 3,15 mm) ermittelt und der Mittelwert berechnet. Bestimmt wurde die Kraft, die erforderlich war, um die Granalie zwischen Stempel und Platte des Bruchfestigkeitstesters zu zerbrechen. Granalien mit einer Berstfeste > 400 N und solche mit einer Berstfeste < 10 N wurden bei der Mittelwertbildung nicht berücksichtigt.

Die Werte für den Abrieb wurden mit dem Rolltrommelverfahren nach Busch bestimmt. Hierzu wurden 50 g des Granulats mit einer Korngrößenfraktion von 2,5 - 3,15 mm zusammen mit 70 Stahlkugeln (Durchmesser 10 mm, 283 g) in eine Rolltrommel eines handelsüblichen Abriebtesters, z. B. ERWEKA, Typ TAR 20, gegeben und 10 min bei 40 U*min⁻¹ gedreht. Anschließend wurde der Inhalt der Trommel auf ein Sieb mit einer Maschenweite von 5 mm, unter dem ein Sieb mit einer Maschenweite von 0,5 mm angeordnet war, 1 min auf einer Siebmaschine (Typ Retsch AS 200 control) gesiebt. Der abgesiebte Feinanteil entspricht dem Abrieb.

Es wurden die folgenden Einsatzstoffe verwendet:
Polyhalit (Poly):

| | |
|---|---|
| Gehalt Kalium: | 11,4 Gew.-% |
| Gehalt Magnesium: | 4,1 Gew.-% |
| Gehalt Calcium: | 12,6 Gew.-% |
| Gehalt Sulfat: | 59,6 Gew.-% |
| Gehalt Chlorid: | 3,1 Gew.-% |
| Gehalt Natrium: | 1,9 Gew.-% |
| Trocknungsverlust bei 105°C: | < 0,3 Gew.-% |
| Glühverlust bei 550°C: | 6,7 Gew.-%. |

Das Polyhalit wies folgende Korngrößenverteilung auf:
d₁₀: 8,3 µm, d₅₀: 475,4 µm, d₉₀: 836,5 µm.

Kalziniertes Polyhalit (calc. Poly):

| | |
|---|---|
| Gehalt Kalium: | 12,1 Gew.-% |
| Gehalt Magnesium: | 4,3 Gew.-% |
| Gehalt Calcium: | 13,7 Gew.-% |
| Gehalt Sulfat: | 62,2 Gew.-% |
| Gehalt Chlorid (berechnet): | 3,3 Gew.-% |
| Gehalt Natrium: | 2,3 Gew.-% |

Das Polyhalit wies folgende Korngrößenverteilung auf:
d₁₀: 32,2 µm, d₅₀: 499,9 µm, d₉₀: 1026 µm.

### Beispiele 1 bis 3

Zunächst wurden kalziniertes Polyhalit und gegebenenfalls Polyhalit mit Wasser in einem Intensivmischer homogen zu einer feuchten Salzzusammensetzung vermischt (Gesamt ca. 1 kg). Die Massenanteile von Polyhalit und kalziniertem Polyhalit sowie die Wassermenge in X ml pro 1 kg der von Wasser verschiedenen Bestandteile der Salzzusammensetzung sind in Tabelle 1 aufgeführt.

Zur Durchführung der Rollgranulierung wurden die jeweils erhaltene feuchte Salzzusammensetzung in einen Granulierteller (Durchmesser: 500 mm, Bordwandhöhe: 85 mm, Neigungswinkel: 39°) gegeben, der mit einer Drehzahl von 35 U/min rotierte. Dann wurden mittels einer Druckluft-Sprühpistole Y ml Wasser pro 1 kg der von Wasser verschiedenen Bestandteile der Salzzusammensetzung kontinuierlich über einen Zeitraum von 10 min zu der Salzzusammensetzung gegeben. Die Mengen an Wasser die in den einzelnen Beispielen eingesetzt wurden, sind ebenfalls in Tabelle 1 zu finden.

Das so erhaltene feuchte Granulat wurde dann in einem Wirbelschichttrockner Modell STREA 1 der Fa. GEA unter Verwendung eines auf 75 °C erwärmten Luftstroms 30 min. getrocknet.

Anschließend wurde das erhaltene Granulat mit einer handelsüblichen Siebvorrichtung klassiert, die Fraktion mit Korngröße 2 - 5 mm (Produkt) abgetrennt. Die Fraktion mit Korngröße < 2 mm kann zur Aufgabe zurückgeführt werden (Feingut). Der Anteil mit Korngröße > 5 mm (Grobgut) kann aufgemahlen und ebenfalls zurückgeführt werden. Für die Bestimmung der Bruchfestigkeit bzw. Berstfeste der Granulate wurde eine Testfraktion (Testgranulat) mit einer Korngröße von 2,5 - 3,15 mm ausgesiebt.

Anschließend wurde das erhaltene Granulat unter Umgebungsbedingungen gelagert und nach 1 Tag bzw. 7 Tagen Bruchfestigkeit, Trockenverlust und Abrieb bestimmt. Die Ergebnisse sind in Tabelle 2 zusammengestellt.

### Beispiel 4 (mit Nachbehandlung)

Kalziniertes Polyhalit bzw. ein Gemisch aus Polyhalit und kalziniertem Polyhalit wurden in den in Tabelle 1 angegebenen Mengenanteilen nach der für die Beispiele 1 bis 3 angegebenen Vorschrift zu einem Granulat verarbeitet, mit dem Unterschied, dass man nach dem Trocknen und vor dem Klassieren das Granulat in einem Mischbehälter unter manueller Durchmischung mit Z ml Wasser je pro 1 kg Granulat vermischte (Nachbehandlung).

Anschließend wurde das erhaltene Granulat unter Umgebungsbedingungen gelagert und nach 1 Tag bzw. 7 Tagen Bruchfestigkeit, Trockenverlust und Abrieb bestimmt. Die Ergebnisse sind in Tabelle 2 zusammengestellt. Beispiel E3 ist dabei ein nicht erfindungsgemäßes Beispiel.

**Tabelle 1**

| Bsp. | calc. Poly | Poly | Wasser [g/kg] | | |
|---|---|---|---|---|---|
| | | | X | Y | Z |
| 1 | 100 | 0 | 140 | 25 | 0 |
| 2 | 75 | 25 | 63 | 69 | 0 |
| 3 | 50 | 50 | 63 | 35 | 0 |
| 4 | 50 | 50 | 67 | 50 | 10 |

**Tabelle 2**

| Bsp. | 1 d | | | 7 d | | |
|---|---|---|---|---|---|---|
| | TV ¹⁾ | Abrieb [%] | BF [N] | TV ¹⁾ | Abrieb [%] | BF [N] |
| 1 | 6,6 | 55 | 26 | 5,8 | 3,2 | 37 |
| 2 | 3,2 | 11 | 23 | 1,9 | 13,0 | 25 |
| 3 | 1,8 | 43 | 17 | 0,9 | 28,0 | 21 |
| 4 | 1,9 | 17 | 19 | 1,5 | 9,0 | 23 |

| | | | | | | |
|---|---|---|---|---|---|---|
| 1) Trockenverlust in Gew.%, bezogen auf die Gesamtmasse des Granulats | | | | | | |

| **Rollgranulat kalziniertes Polyhalitl Polyhalit mit Kieserit oder SOP** | | | | | | | | Restfeuchte [Gew.-%] | Abrieb | Kornhärte | Restfeuchte [Gew.-%] | Abrieb | Kornhärte |
|---|---|---|---|---|---|---|---|---|---|---|---|---|---|
| **Ansatz** | Polyhalit | Kalziniertes Polyhalit | Kieserit | SOP | Wasser [Gew.-%] | WQS [Gew.-%] | Trocknung [105 °C] | 1 d | | | 7d | | |
| E1 | 25 | 50 | 25 | | 11,5 Gew.-% | 0 | 30 min | 0,2% | 51,0% | 19 N | 0,2% | 47% | 20 N |
| E2 | 25 | 50 | | 25 | 15,0 Gew.-% | 0 | 30 min | 0,1% | 17,0% | 23 N | 0,1% | 13% | 22 N |
| E3 | 25 | 25 | 25 | 25 | 16,0 Gew.-% | 0 | 30 min | 0,1% | 21,0% | 26 N | 0,1% | 19,0% | 25 N |

| | | | | | | | | | | | | | |
|---|---|---|---|---|---|---|---|---|---|---|---|---|---|
| WQS = Weizenquellstärke SOP = Kaliumsulfat | | | | | | | | | | | | | |

## Patentansprüche

1. Verfahren zur Herstellung von Kalium, Magnesium und Sulfat enthaltenden Granulaten, umfassend eine Aufbauagglomeration einer Salzzusammensetzung, die zu wenigstens 80 Gew.-%, bezogen auf die von ungebundenem Wasser verschiedenen Bestandteile der Salzzusammensetzung, aus feinteiligem, kalzinierten Polyhalit oder aus einem Gemisch aus feinteiligem, kalzinierten Polyhalit und wenigstens einem weiteren Salz B besteht, das unter Kaliumsulfat, Magnesiumsulfat, dessen Hydraten, Langbeinit und Polyhalit ausgewählt ist, in Gegenwart von Wasser und anschließendes Trocknen des erhaltenen Granulats, wobei die Salzzusammensetzung wenigstens 40 Gew.-%, bezogen auf die von ungebundenem Wasser verschiedenen Bestandteile der Salzzusammensetzung, kalziniertes Polyhalit enthält.

2. Verfahren nach Anspruch 1, wobei die Aufbauagglomeration in Gegenwart von 5 bis 20 Gew.-%, insbesondere 7 bis 17 Gew.-% Wasser, bezogen auf die von ungebundenem Wasser verschiedenen Bestandteile der Salzzusammensetzung, durchgeführt wird.

3. Verfahren nach einem der vorhergehenden Ansprüche, wobei die Salzzusammensetzung wenigstens 50 Gew.-%, bezogen auf die von ungebundenem Wasser verschiedenen Bestandteile der Salzzusammensetzung, kalziniertes Polyhalit enthält.

4. Verfahren nach einem der vorhergehenden Ansprüche, wobei wenigstens 80 Gew.-% der Partikel der Salzzusammensetzung eine Teilchengröße von maximal 2 mm und insbesondere im Bereich von 0,05 bis 1,5 mm aufweisen.

5. Verfahren nach einem der vorhergehenden Ansprüche, wobei das Salz B Polyhalit oder ein Gemisch von Polyhalit mit wenigstens einem weiteren Salz ist, das unter Kaliumsulfat, Magnesiumsulfat und dessen Hydraten ausgewählt ist.

6. Verfahren nach einem der vorhergehenden Ansprüche, wobei das kalzinierte Polyhalit erhältlich ist durch Kalzinieren eines beim Zerkleinern eines bergmännisch abgebauten Polyhalits anfallenden feinteiligen Polyhalits.

7. Verfahren nach einem der vorhergehenden Ansprüche, wobei man der Aufbauagglomeration eine mit Wasser angefeuchtete Salzzusammensetzung zuführt, die vorzugsweise 2 bis 20 Gew.-%, insbesondere 3 bis 15 Gew.-% Wasser, bezogen auf die von ungebundenem Wasser verschiedenen Bestandteile der Salzzusammensetzung, enthält.

8. Verfahren nach einem der vorhergehenden Ansprüche, wobei man eine Teilmenge des Wassers der Salzmischung während der Aufbauagglomeration zuführt.

9. Verfahren nach Anspruch 8, wobei die während der Aufbauagglomeration zugeführte Wassermenge 2 bis 10 Gew.-%, bezogen auf die von ungebundenem Wasser verschiedenen Bestandteile der Salzzusammensetzung, beträgt.

10. Verfahren nach einem der vorhergehenden Ansprüche, wobei die Aufbauagglomeration eine Rollagglomeration umfasst.

11. Verfahren nach einem der vorhergehenden Ansprüche, wobei die Trocknung als Trocknung in der Wirbelschicht durchgeführt wird.

12. Verfahren nach einem der vorhergehenden Ansprüche, wobei sich der Trocknung des Granulats eine Nachbehandlung des Granulats mit Wasser anschließt.

13. Verfahren nach Anspruch 12, wobei die für die Nachbehandlung verwendete Wassermenge im Bereich von 0,1 bis 4 Gew.-%, bezogen auf die Gesamtmasse des Granulats liegt.

14. Verfahren nach einem der vorhergehenden Ansprüche, wobei die Restfeuchte des erhaltenen Granulats im Bereich von 0,2 bis 10 Gew.-%, bezogen auf die Gesamtmasse des Granulats liegt.

15. Verfahren nach einem der vorhergehenden Ansprüche, wobei sich der Aufbauagglomeration und der Trocknung und der ggf. durchgeführten Nachbehandlung eine Klassierung des Granulats anschließt.

16. Verfahren nach Anspruch 15, wobei man das bei der Klassierung anfallende Unterkorn in die Aufbauagglomeration zurückführt.

## Claims

1. Process for preparing granules containing potassium, magnesium and sulfate, comprising buildup agglomeration of a salt composition which consists to an extent of at least 80% by weight, based on the constituents of the salt composition other than unbound water, of finely divided, calcined polyhalite or of a mixture of finely divided, calcined polyhalite and at least one further salt B selected from potassium sulfate, magnesium sulfate, hydrates thereof, langbeinite and polyhalite, in the presence of water, and subsequent drying of the resulting granules, wherein the salt composition contains at least 40% by weight of calcined polyhalite, based on the constituents of the salt composition other than unbound water.

2. Process according to Claim 1, wherein the buildup agglomeration is carried out in the presence of 5% to 20% by weight, more particularly 7% to 17% by weight of water, based on the constituents of the salt composition other than unbound water.

3. Process according to either of the preceding claims, wherein the salt composition contains at least 50% by weight of calcined polyhalite, based on the constituents of the salt composition other than unbound water.

4. Process according to any of the preceding claims, wherein at least 80% by weight of the particles of the salt composition have a particle size of not more than 2 mm and more particularly in the range from 0.05 to 1.5 mm.

5. Process according to any of the preceding claims, wherein the salt B is polyhalite or a mixture of polyhalite with at least one further salt, selected from potassium sulfate, magnesium sulfate and hydrates thereof.

6. Process according to any of the preceding claims, wherein the calcined polyhalite is obtainable by calcining a finely divided polyhalite obtained on comminution of a mined polyhalite.

7. Process according to any of the preceding claims, wherein the buildup agglomeration is supplied with a water-moistened salt composition which contains preferably 2% to 20% by weight, more particularly 3% to 15% by weight of water, based on the constituents of the salt composition other than unbound water.

8. Process according to any of the preceding claims, wherein a portion of the water is supplied to the salt mixture during the buildup agglomeration.

9. Process according to Claim 8, wherein the amount of water supplied during the buildup agglomeration is 2% to 10% by weight, based on the constituents of the salt composition other than unbound water.

10. Process according to any of the preceding claims, wherein the buildup agglomeration comprises a roll agglomeration.

11. Process according to any of the preceding claims, wherein the drying is carried out as drying in a fluidized bed.

12. Process according to any of the preceding claims, wherein the drying of the granules is followed by aftertreatment of the granules with water.

13. Process according to Claim 12, wherein the amount of water used for the aftertreatment is in the range from 0.1% to 4% by weight, based on the total mass of the granules.

14. Process according to any of the preceding claims, wherein the residual moisture content of the granules obtained is in the range from 0.2% to 10% by weight, based on the total mass of the granules.

15. Process according to any of the preceding claims, wherein the buildup agglomeration and the drying, and the aftertreatment carried out optionally, are followed by a classification of the granules.

16. Process according to Claim 15, wherein the undersize obtained in the classification is returned to the buildup agglomeration.

## Revendications

1. Procédé pour la préparation de granulats contenant du potassium, du magnésium et du sulfate, comprenant une agglomération constitutive d'une composition de sel qui contient, à raison d'au moins 80% en poids, par rapport aux constituants différents de l'eau non liée de la composition de sel, de la polyhalite calcinée finement divisée ou un mélange de polyhalite calcinée finement divisée et d'au moins un autre sel B qui est choisi parmi le sulfate de potassium, le sulfate de magnésium, leurs hydrates, la langbeinite et la polyhalite, en présence d'eau et un séchage consécutif du granulat obtenu, la composition de sel contenant au moins 40% en poids, par rapport aux constituants différents de l'eau non liée de la composition de sel, de polyhalite calcinée.

2. Procédé selon la revendication 1, l'agglomération constitutive étant réalisée en présence de 5 à 20% en poids, en particulier de 7 à 17% en poids d'eau, par rapport aux constituants différents de l'eau non liée de la composition de sel.

3. Procédé selon l'une des revendications précédentes, la composition de sel contenant au moins 50% en poids, par rapport aux constituants différents de l'eau non liée de la composition de sel, de polyhalite calcinée.

4. Procédé selon l'une des revendications précédentes, au moins 80% en poids des particules de la composition de sel présentant une grosseur de particule d'au maximum 2 mm et en particulier dans la plage de 0,05 à 1,5 mm.

5. Procédé selon l'une des revendications précédentes, le sel B étant de la polyhalite ou un mélange de polyhalite avec au moins un autre sel qui est choisi parmi le sulfate de potassium, le sulfate de magnésium et leurs hydrates.

6. Procédé selon l'une des revendications précédentes, la polyhalite calcinée pouvant être obtenue par calcination d'une polyhalite finement divisée produite lors du broyage d'une polyhalite obtenu par extraction minière.

7. Procédé selon l'une des revendications précédentes, l'agglomération constitutive étant alimentée en une composition de sel humidifiée par de l'eau, qui contient de préférence 2 à 20% en poids, en particulier 3 à 15% en poids d'eau, par rapport aux constituants différents de l'eau non liée de la composition de sel.

8. Procédé selon l'une des revendications précédentes, une quantité partielle de l'eau du mélange de sel étant alimentée pendant l'agglomération constitutive.

9. Procédé selon la revendication 8, la quantité d'eau alimentée pendant l'agglomération constitutive représentant 2 à 10% en poids, par rapport aux constituants différents de l'eau non liée de la composition de sel.

10. Procédé selon l'une des revendications précédentes, l'agglomération constitutive comprenant une agglomération au rouleau.

11. Procédé selon l'une des revendications précédentes, le séchage étant réalisé comme un séchage en lit tourbillonnant.

12. Procédé selon l'une des revendications précédentes, le séchage du granulat étant suivi d'un post-traitement du granulat par de l'eau.

13. Procédé selon la revendication 12, la quantité d'eau utilisée pour le post-traitement étant située dans la plage de 0,1 à 4% en poids, par rapport à la masse totale du granulat.

14. Procédé selon l'une des revendications précédentes, l'humidité résiduelle du granulat obtenu étant située dans la plage de 0,2 à 10% en poids, par rapport à la masse totale du granulat.

15. Procédé selon l'une des revendications précédentes, l'agglomération constitutive et le séchage et le post-traitement éventuellement réalisé étant suivis d'une classification du granulat.

16. Procédé selon la revendication 15, les grains plus fins produits lors de la classification étant recyclés dans l'agglomération constitutive.
